# EUROPÄISCHE PATENTANMELDUNG

(11) **EP 1 561 410 A1**
(43) Veröffentlichungstag der Anmeldung: **10.08.2005**
(21) Anmeldenummer: 04025715.6
(22) Anmeldetag: 29.10.2004
(51) Int. Cl.: A47J 43/25

(54) **Küchengerät**

(30) Priorität: 06.02.2004 DE 202004001762 U
(71) Anmelder: Ihlow Stanz- und Kunststofftechnik GmbH, 31188 Holle (DE)
(72) Erfinder: Ihlow, Kerstin, 31188 Holle (DE); Peter, Jörg, 31188 Holle (DE)
(74) Vertreter: Sobisch, Peter, Dipl.-Ing.

(57) **Zusammenfassung**

Ein zum Schneiden von Obst und Gemüse bestimmtes, plattenartiges, rechteckiges, entlang beider Längsseiten mit Führungsstegen (2) versehenes Küchengerät, dessen Längsrichtung eine Vorschubrichtung (1") für das Schnittgut bildet, ist mit drei, sich quer zu dem Grundkörper (1) erstreckenden Messerreihen (4) versehen, welche jeweils mehrere Messerelemente (12) aufweisen. Jedes Messerelement (12) ist durch einen, aus der Ebene des Grundkörpers (1) herausragenden, schalenartig gewölbten Körper gekennzeichnet, dessen stirnseitige Berandung eine Schneide für das zu behandelnde Schnittgut bildet, wobei die Stirnseiten der Messerelement (12) sich unter einem stumpfen Winkel zu der Ebene des Grundkörpers (1) erstrecken und wobei sich die, der Unterseite des Grundkörpers zugekehrt, sich an die Schneiden eines jeden Messerelementes (12) anschließenden Flächen jeweils Ableitflächen für das Schnittgut bilden und zur Unterseite hin gekrümmt ausgebildet sind. Das Küchengerät ermöglicht einen besonders leichtgängigen Schnitt auch bei ansonsten schwierig zu behandelnden Schnittgut.

## Beschreibung

Die Erfindung bezieht sich auf ein Küchengerät entsprechend dem Oberbegriff des Anspruchs 1.

Derartige Küchengeräte, auch Reiben genannt, sind in vielfältiger Form bekannt. Sie bestehen regelmäßig aus einem plattenförmigen, regelmäßig rechteckigen Grundkörper, dessen Längsseiten mit Führungsstegen für das Schnittgut versehen sind und der ein zentral angeordnetes, zwischen zwei Anlauffeldern befindliches Messerfeld aufweist. Das Messerfeld ist mit zur Unterseite hin offenen Messerelementen versehen, die nach Maßgabe einer oder mehrerer, sich quer erstreckenden Reihen angeordnet sind. Das zu behandelnde Schnittgut, im Regelfall Obst oder Gemüse, wird über die Anlauffelder in Richtung auf das Messerfeld hin sowie durch dieses hindurch geführt und dementsprechend in Streifen oder in sonstiger Form geschnitten. Solche Küchengeräte sind beispielsweise aus den Druckschriften DE 196 33 9ö86 C2 und DE 196 22 751 A1 bekannt.

Die Gebrauchseigenschaften, insbesondere die Form des geschnittenen Gutes werden maßgeblich durch die konkrete Beschaffenheit sowie die Anordnung der Messerelemente bestimmt. Aus dem DE 85 00 397.2 U1 ist ein vergleichbares Küchengerät bekannt, dessen Messerelemente durch zylinderschalenartige aus der Ebene des Grundkörpers herausragende, sich jeweils über rechteckige Ausnehmungen wölbende Körper gebildet sind, deren Achsen sich parallel zu der Längsrichtung des Grundkörpers- bzw. der Vorschubrichtung für das Schnittgut erstrecken. Die Stirnseiten dieser Körper bilden jeweils Schneiden und es sind deren Unterseiten, die den genannten Ausnehmungen zugekehrt sind jeweils als Ableitflächen für das Schnittgut ausgebildet. Die Stirnseiten der genannten Körper und somit die Schneiden erstrecken sich jeweils in Ebenen senkrecht zu der Ebene des Grundkörpers. Beide Stirnseiten eines solchen Körpers sind als Schneiden ausgebildet und es ist das auf diese Weise definierbare Messerelement symmetrisch bezüglich einer sich quer zu dem Grundkörper erstreckenden Mittelebene ausgebildet. Dieses Küchengerät ist zum streifenartigen Schneiden von lebensmittelartigem Gut bestimmt, wobei infolge der Orientierung der Schneiden relativ zu einer Vorschubrichtung des Schnittgutes sowie der Auflageebene die Schneide des einzelnen Messerelementes im Wesentlichen entlang ihrer gesamten Länge gleichzeitig in das Schnittgut eindringt. Die zum Bewegen des Schnittgutes durch das Messerfeld hindurch aufzuwendenden Kräfte und damit der Schnittvorgang können somit nach Maßgabe der Konsistenz des Schnittgutes mehr oder weniger beschwerlich ausfallen.

Es ist vor diesem Hintergrund die Aufgabe der Erfindung, ein Küchengerät der eingangs bezeichneten Art dahingehend auszugestalten, dass dessen Gebrauchseigenschaften verbessert werden, wobei insbesondere an eine leichtgängigere Betätigung gedacht ist. Gelöst ist diese Aufgabe bei einem solchen Küchengerät durch die Merkmale des Kennzeichnungsteils des Anspruchs 1.

Erfindungswesentlich ist hiernach, dass sich die Stirnseiten der einzelnen Messerelemente unter einem stumpfen Winkel zu der Ebene des Grundkörpers erstrecken. Der Vorschub des Schnittgutes durch ein Messerfeld hindurch ist hiernach dadurch gekennzeichnet, dass der Eingriff der Schneiden in das Schnittgut nicht gleichzeitig entlang deren gesamter Länge sondern nach Maßgabe des Vorschubs sowie des genannten Winkels allmählich erfolgen. Dies bringt eine beträchtliche Verminderung des zum Vorschub des Schnittgutes erforderlichen Kraftaufwands mit sich, ein Umstand, der insbesondere bei der Behandlung von ansonsten schwierig zu behandelndem Gut von Bedeutung ist. Das einzelne Messerelement kann aus einer Zylinderschale bestehen, deren Stirnseiten nach Maßgabe eines stumpfen Winkels verlaufen, so dass sich ein allmählicher Schneideneingriff mit dem Schnittgut ergibt.

In der einfachsten Form kann ein solches Messerelement auf lediglich einer Stirnseite mit einer Schneide versehen sein, da auch in diesem Fall der zitierte Vorteil zum Tragen kommt. Regelmäßig werden jedoch beide Stirnseiten des Messerelements als Schneiden ausgebildet sein.

Gemäß den Merkmalen der Ansprüche 2 und 3 weist das auf diese Weise gebildete Messerelement Symmetrieeigenschaften in Längs- und in Querrichtung auf. Dies bedeutet, dass die Schneideigenschaften bei einer hin und her durch das Messerfeld hindurch erfolgenden Bewegung des Schnittgutes dementsprechend gleich ausfallen.

Entsprechend den Merkmalen des Anspruchs 4 sind im Rahmen eines Messerfeldes in an sich bekannter Weise regelmäßig jeweils mehrere Messerreihen vorgesehen, die sich parallel zueinander erstrecken, deren Messerelemente jedoch in Querrichtung versetzt zueinander angeordnet sind. Auf diese Weise ist eine vollständige, insbesondere lückenlose Erfassung der gesamten Schnittfläche des Schnittgutes gegeben.

Die aus der Unterseite des Grundkörpers herausragenden, jeweils einer Messerreihe zugeordneten Rippen bilden eine mechanische Versteifung und damit eine Stabilisierung des Küchengerätes, womit eine durch die Ausnehmungen der Messerelemente ansonsten gegebene Festigkeitsminderung ausgeglichen wird.

Die Unterseite der beispielsweise zylinderschalenförmigen Messerelemente ist entsprechend den Merkmalen des Anspruchs 6 als Ableitflächen für das Schnittgut ausgeformt, so dass eine leichtgängige, insbesondere behinderungsfreie Abfuhr des Schnittgutes gegeben ist.

Die Merkmale der Ansprüche 7 und 8 sind darauf gerichtet, das Küchengerät an einem Gefäß bzw. einem Topfrand während der Behandlung des Schnittgutes zu fixieren. Sie erleichtern somit den praktischen Gebrauch dieses Gerätes.

Die Merkmale des Anspruchs 9 sind auf eine einfach verstellbare Form des Messerelements gerichtet.

Die Erfindung wird im Folgenden unter Bezugnahme auf das in den Zeichnungen wiedergegebene Ausführungsbeispiel näher erläutert werden. Es zeigen:
Fig. 1 eine Darstellung des erfindungsgemäßen Küchengerätes in einer Draufsicht;
Fig. 2 eine Schnittdarstellung des Küchengerätes entsprechend einer Ebene II-II der Fig. 1;
Fig. 3 eine vergrößerte Teilansicht einer Einzelheit III der Fig. 2;
Fig. 4 eine Darstellung des Küchengerätes in einer Schnittebene IV-IV der Fig. 1;
Fig. 5 eine vergrößerte Einzelheit V der Fig. 4.

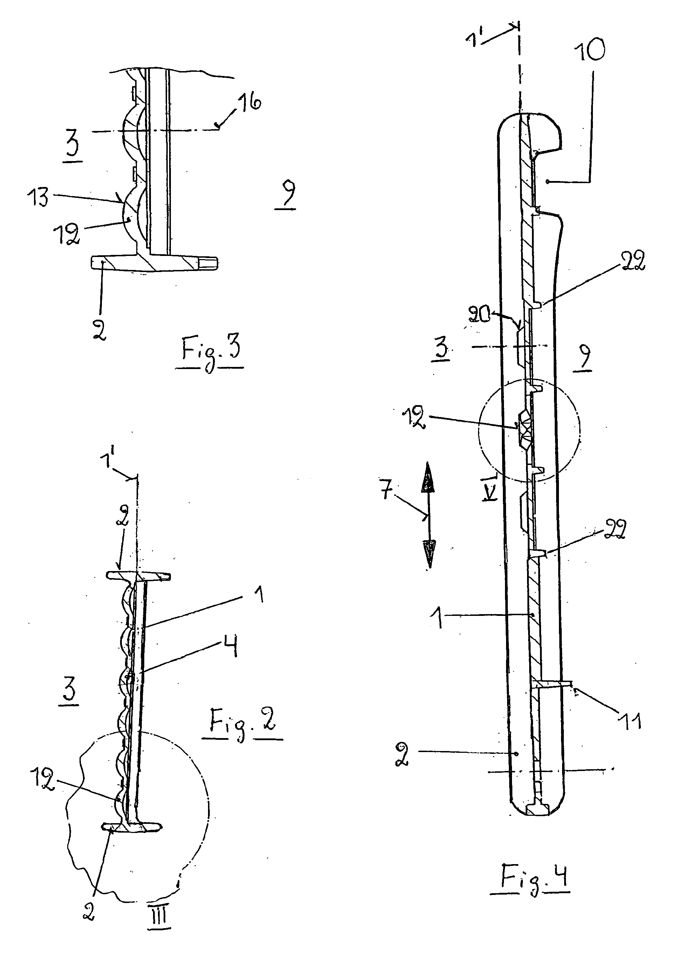

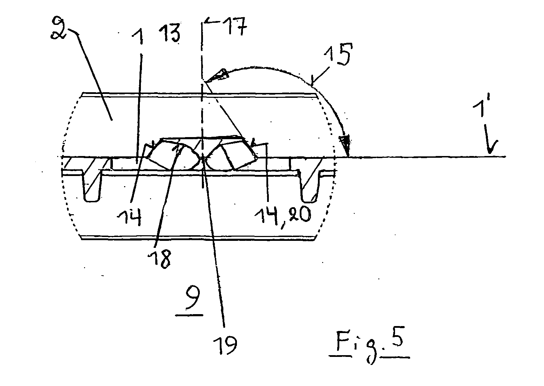

Das Küchengerät besteht aus einem plattenförmigen, in der Draufsicht rechteckigen langgestreckten Grundkörper 1, entlang dessen Längsseiten sich Führungsstege 2 erstrecken, die - wie insbesondere die Fig. 2 zeigt - ober- und unterseitig um ein definiertes Maß aus der Ebene 1' des Grundkörpers 1 herausragen. Mit 1" ist die Vorschubrichtung für das Schnittgut bezeichnet, die parallel zu der Längserstreckung des Grundkörpers 1 verläuft.

Die Oberseite 3 des Grundkörpers 1 ist in einem ungefähr mittigen Bereich durch ein Messerfeld gekennzeichnet, das durch eine Anordnung von drei, parallel zueinander und senkrecht zu der Vorschubrichtung 1" verlaufenden, im Folgenden noch näher zu beschreibenden Messerreihen 4 gebildet ist, an welches sich beidseitig untereinander gleich beschaffene, durch eine Parallelanordnung von streifenartigen, sich in Vorschubrichtung 1" erstreckenden Erhebungen gekennzeichnete Anlauffelder 5, 6 anschließen. Diese Erhebungen sind dazu bestimmt, auf das beidseitig in Vorschubrichtung 1", somit hin- und hergehend zu bewegende Schnittgut eine Führungswirkung in dieser Richtung auszuüben, wobei durch die Führungsstege 2 ein seitliches, d.h. im Wesentlichen senkrecht zu der Vorschubrichtung 1" orientiertes Abgleiten des Schnittgutes von dem Grundkörper 1 verhindert wird.

Die Messerreihen 4 sowie die Anlauffelder 5, 6 sind in dem gezeigten Ausführungsbeispiel dahingehend angelegt, dass eine Symmetrie bezüglich einer durch die mittlere der drei Messerreihen 4 verlaufende, sich quer zu der Vorschubrichtung 1" erstreckende Vertikalebene 8 gegeben ist.

Wie insbesondere der Fig. 4 entnehmbar ist, sind die der Unterseite 9 zugekehrten Führungsstege 2 an ihrem einen Ende mit einer durchgehenden, im Querschnitt etwa U-förmigen, zur Unterseite hin offenen Ausnehmung 10 versehen. Diese dient beim Gebrauch des Küchengerätes dessen Fixierung an der Berandung eines Gefäßes. eines Topfes oder dergleichen. Eine ähnliche Haltefunktion kann durch einen, aus der Unterseite 9 des Grundkörpers herausragenden, sich quer zu diesem erstreckenden Steg 11 ausgeübt werden.

Eine jeder der Messerreihen 4 besteht aus untereinander gleich beschaffenen Messerelementen 12, deren der Oberseite 3 zugekehrte Oberfläche durch eine aus der Ebene des Grundkörpers 1 herausragende zylinderschalenartige Fläche 13 gebildet ist, deren Achse sich parallel zu der Vorschubrichtung 1" erstreckt und deren Stirnseiten 14 in Ebenen liegen, die sich unter einem stumpfen Winkel 15 zu der Ebene 1' des Grundkörpers 1 erstrecken.

Die Flächen 13 mit den nach Maßgabe der Winkel 15 bezüglich der Ebene 1' abgeschrägten Stirnseiten 14 sind symmetrisch bezüglich einer parallel zu der Vorschubrichtung 1" und vertikal zu der Ebene 1' verlaufenden ersten Ebene 16 (Fig. 3) und gleichermaßen bezüglich einer sich vertikal zu der Ebene 1' sowie senkrecht zu der Ebene 16 erstreckenden zweiten Ebene 17 (Fig. 5).

Die in den Stirnseiten 14 endenden Berandungen der Fläche 13 bildet jeweils eine Schneide 20, die sich in gekrümmter Form bis zu der Ebene 1' erstreckt. Die der Unterseite 9 zugekehrte, der Fläche 13 gegenüberliegende Fläche 18 des Messerelements 12 - in der Ebene 16 gesehen - ist durch einen in Richtung auf einen Mittelsteg 19 hin verlaufenden, zur Unterseite 9 hin konkav gekrümmten Verlauf gekennzeichnet. Angenähert wird die Fläche 18 durch eine konusartige, sich in Richtung auf den Mittelsteg 19 hin querschnittsmäßig verjüngende Schalenfläche gebildet. In jedem Fall schneiden sich die Berandungen der Flächen 13, 18 in der Schneide 20.

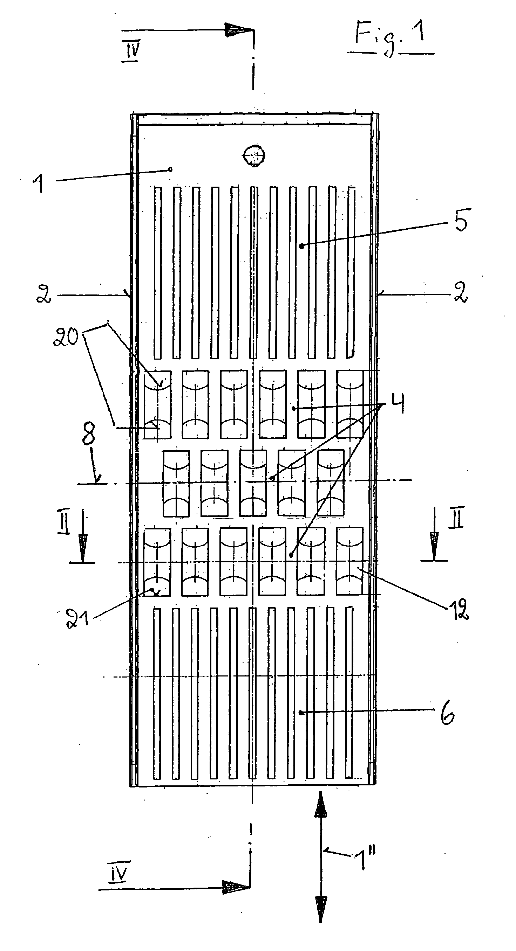

Wie insbesondere der Fig. 1 entnehmbar ist, erstrecken sich die Messerelemente 12 oberhalb von jeweils rechteckförmigen Ausnehmungen 21, wobei zur mechanischen Verstärkung der Rippen 22 vorgesehen sind, und zwar beiderseits einer jeden Reihe von Ausnehmungen 21.

Das zu behandelnde Schnittgut wird auf das eine der beiden Anlauffelder 5,6 gesetzt und auf der Ebene 1' aufliegend hin- und hergehend in Vorschubrichtung 1" durch das Messerfeld geführt.

Infolge der Schrägstellung der Schneiden 20 bezüglich der Ebene 1', ergibt sich ein leichtgängiger Schnittvorgang auch bei ansonsten schwierig zu behandelndem Schnittgut.

Das Küchengerät kann einstückig als Spritzgussteil aus Kunststoff, z. B. einem Thermoplasten oder auch einer Kunststoffmischung hergestellt werden.

## Patentansprüche

1. Küchengerät zur Behandlung von lebensmittelartigem Schnittgut, insbesondere zum Schneiden von Obst oder Gemüse, mit einem plattenartigen, rechteckigen, entlang beider Längsseiten mit Führungsstegen (2) versehenen Grundkörper (1), dessen Längsrichtung die Vorschubrichtung (1 ") für das Schnittgut bildet, mit wenigstens einer, sich quer zu dem Grundkörper (1) erstreckenden Messerreihe (4), die mehrere Messerelemente (12) aufweist, wobei jedes Messerelement (12) aus einem aus der Ebene (1') des Grundkörpers (1) herausragenden, schalenartig über einer Ausnehmung (21) gewölbten Körper besteht, wobei die Berandung dessen wenigstens einer Stirnseite (14) eine Schneide (20) für das zu behandelnde Schnittgut bildet und wobei die Stirnseite (14) in der Vorschubrichtung (1 ") orientiert bzw. offen ist, **dadurch gekennzeichnet, dass** sich die Stirnseite (14) des Messerelements (12) unter einem stumpfen Winkel (15) zu der Ebene (1') des Grundkörpers (1) erstreckt.

2. Küchengerät nach Anspruch 1, **dadurch gekennzeichnet, dass** jedes Messerelement (12) symmetrisch bezüglich einer Ebene (19) ausgebildet ist, die sich senkrecht zu der Ebene (1') des Grundkörpers (1) und quer zu diesem bzw. senkrecht zu der Vorschubrichtung (1 ") erstreckt.

3. Küchengerät nach Anspruch 1 oder 2, **dadurch gekennzeichnet, dass** jedes Messerelement (12) symmetrisch bezüglich einer Ebene (16) ausgebildet ist, die sich senkrecht zu der Ebene (1') des Grundkörpers (1) parallel zu der Vorschubrichtung (1") sowie durch den Scheitelpunkt des Messerelements (12) hindurcherstreckt.

4. Küchengerät nach einem der Ansprüche 1 bis 3, **gekennzeichnet durch** mehrere, zueinander parallele Messerreihen (4), wobei die Messerelemente (12) der einzelnen Messerreihen (4) in Querrichtung des Grundkörpers (1) versetzt zueinander angeordnet sind.

5. Küchengerät nach einem der Ansprüche 1 bis 4, **gekennzeichnet durch** Rippen (22), die sich in Querrichtung des Grundkörpers (1) erstrecken und beiderseits einer Messerreihe (4) in Richtung zu einer Unterseite (9) hin aus dem Grundkörper (1) herausragen.

6. Küchengerät nach einem der vorangegangenen Ansprüche 1 bis 5, **dadurch gekennzeichnet, dass** die der Unterseite (9) zugekehrte, sich an die Schneide (20) eines Messerelements (12) anschließende Fläche (18) eine Ableitfläche für das Schnittgut bildet und zur Unterseite (9) hin konkav gekrümmt ist.

7. Küchengerät nach einem der vorangegangenen Ansprüche 1 bis 6, **dadurch gekennzeichnet, dass** die Führungsstege (2) unter- und oberseitig aus der Ebene (1') des Grundkörpers (1) herausragen, wobei in die der Unterseite (9) zugekehrten Abschnitte im Querschnitt U-förmige, zueinander in Querrichtung des Grundkörpers (1) fluchtende zur Unterseite (9) hin offene Ausnehmungen (10) eingeformt sind.

8. Küchengerät nach einem der vorangegangenen Ansprüche 1 bis 7, **gekennzeichnet durch** einen sich senkrecht zu der Ebene des Grundkörpers (1) erstreckenden, die seitlichen Führungsstege überragenden Steg (11).

9. Küchengerät nach einem der vorangegangenen Ansprüche 1 bis 8, **dadurch gekennzeichnet, dass** die der Oberseite (3) zugekehrten Flächen (13) der Messerelemente (12) Zylinderflächen sind, deren Achsen sich parallel zu der Vorschubrichtung (1 ") erstrecken.
